# EUROPÄISCHE PATENTSCHRIFT

(11) **EP 3 617 084 B1**
(45) Veröffentlichungstag und Bekanntmachung des Hinweises auf die Patenterteilung: **07.07.2021**
(21) Anmeldenummer: 18192211.3
(22) Anmeldetag: 03.09.2018
(51) Int. Cl.: B65D 5/68, B65D 71/02, B60P 7/08, B60P 7/10, B65D 21/08

(54) **SICHERUNGSSYSTEM ZUR LAGERUNG EINES BEFÜLLTEN GROSSRAUMBEHÄLTERS SOWIE DECKELZUSCHNITT EINES ZU DEM GROSSRAUMBEHÄLTER ZUGEHÖRIGEN VERSCHLUSSDECKELS**
SECURING SYSTEM FOR STORING A FILLED LARGE-CAPACITY CONTAINER AND BLANK OF A CLOSURE LID OF THE LARGE-CAPACITY CONTAINER
SYSTÈME DE SÉCURISATION POUR LE STOCKAGE D'UN CONTENEUR DE GRANDE CAPACITÉ REMPLI AINSI QU'ÉBAUCHE D'UN COUVERCLE DE FERMETURE APPARTENANT AU CONTENEUR DE GRANDE CAPACITÉ

(43) Veröffentlichungstag der Anmeldung: 04.03.2020
(73) Patentinhaber: Smurfit Kappa GmbH, 22047 Hamburg (DE)
(72) Erfinder: Schmid, Karl, 68766 Hockenheim (DE)
(74) Vertreter: Stork Bamberger Patentanwälte PartmbB

(56) Entgegenhaltungen:
- EP-A1- 1 911 625
- DE-U1-202005 002 419
- FR-A1- 2 291 110
- FR-A1- 2 749 280
- US-A1- 2004 251 300
- US-A1- 2010 301 108

## Beschreibung

Die Erfindung betrifft ein Sicherungssystem, das die Lagerung wenigstens eines befüllten Großraumbehälters an einer Lagerfläche sichert, umfassend den Großraumbehälter, ein durch ein Abdeckteil mit einem Rand gebildetes Sicherungselement, das an einer Behälteroberseite, einem Behälterboden gegenüberliegend, angeordnet ist, die Lagerfläche und eine Einspannung mittels Spannstrang, wobei die Einspannung zur Spannbefestigung des Großraumbehälters mit dem Rand und mit Fixpunkten oder Fixierstellen der Lagerfläche oder dieser zugeordneten Fixpunkten verbunden ist. Die Erfindung bezieht sich auch auf einen für das Sicherungssystem eingerichteten Deckelzuschnitt eines Verschlussdeckels, der zum Verschließen einer oberseitigen Befüllungsöffnung eines zu dem Verschlussdeckel gehörenden Großraumbehälters eingerichtet ist, wobei der Deckelzuschnitt, der aus gegen Rückstellkraft faltbarem Material besteht, ein mehreckiges Bodenfeld aufweist, an das über vorgefertigte Bodenfaltlinien Randfelder angelenkt sind, die im aufgerichteten Zustand einen Verschlussdeckelrand zum formschlüssigen Übergreifen eines Öffnungsrandes der Befüllungsöffnung des Großraumbehälters bilden.

Es handelt sich um Großraumbehälter, die aus wenigstens einem Zuschnitt, der aus nachgiebigem, gegen Rückstellkraft faltbarem Material wie Wellpappe oder dergleichen eingeschränkt formstabilen Materialien besteht, aufgerichtet werden. Die Großraumbehälter bilden Silobehälter zur Aufnahme von Schüttgütern wie gekörnten, pulverförmigen oder anderen rieselfähigen Stoffen und sind insbesondere als Achteckbehälter unter der Bezeichnung Oktabin und Oktatainer bekannt. Ein solcher Großraumbehälter weist ein Bodenteil mit integrierter oder verbundener Behälterwandung und einen daran formschlüssig angepassten abnehmbaren Verschlussdeckel auf. Das Bodenmaß des Großraumbehälters liegt, der Fläche einer Europalette entsprechend, zumeist in der Größenordnung von 800 mm x 1200 mm mit einer Höhe von zumeist 800 mm bis 2000 mm. Befüllungsgewichte liegen zum Beispiel im Bereich von 1000 kg. Die befüllten Großraumbehälter werden in gewissem Maß durch Belastungs- und Befüllungsdruck auf das eingeschränkt formhaltige Behälter- und Deckelmaterial deformiert. Zum gesicherten Lagern und Transport an einer Lagerfläche, insbesondere der Ladefläche eines Lastkraftwagens sind besondere Maßnahmen erforderlich. In der Breite der Ladefläche eines Lastkraftwagens werden die Großraumbehälter üblicherweise in Zweierreihen jeweils auf einer Palette für einen Großraumbehälter angeordnet und müssen in dieser Anordnung besonders gesichert werden, um auch dynamischen Belastungskräften standzuhalten. Die Großraumbehälter können in zur Lagerfläche senkrechter oder schräger Lage angeordnet sein.

Bekannte Sicherungssysteme verwenden Sicherungselemente in Form von Abdeckungen und zum Beispiel Kantenschutzwinkel, die sämtlich als separate Teile bereitgehalten und in einer Einspannung mit Spanngurten angelegt werden müssen. Es ist bekannt (EP 1 911 625 B1), Sicherungsflächen mehrteilig aus einer Kopfschlinge, die den Verschlussdeckel des Großraumbehälters überfasst, und einer Bauchbinde zu bilden. Kopfschlinge und Bauchbinde müssen besonders angepasst und gehandhabt werden. Ein bekanntes System (DE 20 2005 002 419 U1), das Kopfschlingen vermeidet, sieht zur Ladesicherung für jeden Großraumbehälter ein zusätzliches Sicherungselement vor, das durch eine Abdeckung mit einem heruntergezogenen, durch Vernähen oder Verschweißen angeformten Randabschnitt gebildet und oberseitig auf den mit seinem Verschlussdeckel geschlossenen Großraumbehälter legbar ist. Diese auf den verwendeten Verschlussdeckel anzupassende Abdeckung bildet ein zweiteiliges separates Sicherungselement, das als solches mit einem in Vorfertigung an dem Abdeckrand angebrachten und zu diesem gehörenden Spanngurt ausgestattet sein muss. Der Randspanngurt dient zur Anbringung von Spanngurten einer Einspannung zwischen der Abdeckung und Fixpunkten einer Lagerfläche. Auch ist es bekannt (DE 20 2007 006 147 U1), eine Einspannung durch eine Gurtbandanordnung zu bilden, die durch ein Abdecknetz mit aneinander genähten Gurtbändern gebildet ist. Das Gurtnetz ist an die Maße des Großraumbehälters besonders anzupassen. Bei besonderer Beanspruchung des insbesondere auf der Ladefläche eines Lastkraftwagens und insbesondere in einer Behältergruppe gesicherten Großraumbehälters kann die Sicherung mit den bekannten separaten Sicherungselementen infolge einer sporadisch auftretenden Behälterdeformation geschwächt sein, so dass zusätzliche Sicherungselemente oder Abspannverstärkungen erforderlich sind.

Demgegenüber liegen der Erfindung die Ziele zugrunde, das Sicherungssystem zur Einsparung von Sicherungselementen und zur erleichterten sowie wirtschaftlichen Handhabung wesentlich zu vereinfachen, wobei die Sicherung der befüllten, aus faltbarem und deformierbarem Zuschnittmaterial aufgerichteten Großraumbehälter dennoch im besonderen Maß gewährleistet sein soll. Insbesondere sollen zur Sicherung und Handhabung allein herkömmlich eingesetzte Spannstränge wie Spanngurte ohne zusätzlich an dem befüllten Großraumbehälter anzubringende Sicherungselemente ausreichen.

Erfindungsgemäß werden die Ziele in Verbindung mit den Merkmalen des eingangs genannten Sicherungssystems dadurch gelöst, dass das Sicherungselement durch einen Verschlussdeckel gebildet ist, der zum Schließen einer Befüllungsöffnung an der Behälteroberseite ein notwendiger Bestandteil des Großraumbehälters ist, der aus wenigstens einem Zuschnitt aus gegen Rückstellkraft faltbarem Material aufgerichtet ist, wobei der Verschlussdeckel einen einen Öffnungsrand der Befüllungsöffnung formschlüssig übergreifenden Verschlussdeckelrand aufweist, dass der Verschlussdeckel durch einen Deckelzuschnitt aus gegen Rückstellkraft faltbarem Material gebildet ist, der mit um vorgefertigte Bodenfaltlinien faltbaren, den Verschlussdeckelrand bildenden Randfeldern aufrichtbar ist, und dass wenigstens eine an dem Verschlussdeckelrand hervorstehende, Bestandteil des Deckelzuschnitts bildende Doppellasche gebildet ist, die eine von dem Verschlussdeckelrand abstehende Ansatzlasche und eine an der Ansatzlasche angelenkte und dagegen gefaltete Krempellasche aufweist, die in einer Halteverbindung lösbar aneinander festgesetzt sind und dadurch einen Flachraum mit einem Durchgang ausbilden, durch den wenigstens ein gespannter Spannstrang der Einspannung unverlierbar hindurchgeführt ist, wobei der wenigstens eine Spannstrang so geführt ist, dass die Doppellasche in Richtung des Behälterbodens und gegen eine Wand des Großraumbehälters unterhalb des Verschlussdeckelrandes gedrängt wird.

Ein erfindungsgemäßer Deckelzuschnitt, der zur Bildung eines Verschlussdeckels eines Großraumbehälters eingerichtet ist, ist in Verbindung mit den Merkmalen des eingangs genannten Deckelzuschnitts weiterhin derart zur Bildung eines vorgefertigten Sicherungselements eingerichtet, dass er im zum Verschlussdeckel aufrichtbaren, den zugehörigen Großraumbehälter schließenden Zustand ein Sicherungselement eines Sicherungssystems, insbesondere nach einem der Ansprüche 1 bis 9, bildet, das den befüllten Großraumbehälter an einer Lagerfläche mittels einer den Verschlussdeckel mit Fixpunkten der Lagerfläche verbindenden Einspannung sichert, wobei der Deckelzuschnitt als vorgefertigtes Sicherungselement wenigstens eine an einem zugehörigen Randfeld hervorragende Doppellasche aufweist, die durch ein an dem zugehörigen Randfeld hervorspringende, im Deckelzuschnitt eine Innenlasche bildende Ansatzlasche und durch eine im Deckelzuschnitt eine Außenlasche bildende Krempellasche gebildet ist, die mittels wenigstens einer Laschenfaltlinie an die Ansatzlasche derart zum Falten gegen die Ansatzlasche angelenkt ist, dass ein Flachraum resultiert, der, parallel mit dem zugehörigen Randfeld einen Durchgang zum Durchführen wenigstens eines Spannstranges der Einspannung des Sicherungssystems bildet.

Mit den erfindungsgemäßen Maßnahmen erreicht man eine Reihe von Vorteilen. Die erfindungsgemäß vorgesehene Doppellasche ist ein integraler Bestandteil des zu dem Großraumbehälter gehörenden Verschlussdeckels, der mit einem Verschlussdeckelrand formschlüssig und satt außen auf der Behälterwandung sitzt. Der Verschlussdeckel befindet sich in Anlage an dem Füllgut des damit vollständig gefüllten Behälters. Dadurch wird der Verschlussdeckel als solcher ein wesentliches Sicherungselement des Sicherungssystems und der Deckelzuschnitt, aus dem der Verschlussdeckel aufrichtbar ist, bildet ein entsprechend vorgefertigtes Sicherungselement, das eigenständig konfektionierbar ist und zu Verfügung steht. Das Sicherungselement ist als Körperbestandteil mit dem Körper des befüllten Großraumbehälters auch bei Deformation unter Belastungs- oder Befüllungsdruck fest und haltesicher verbunden. Herkömmliche separate Sicherungselemente in Form von Abdeckungen oder Einspannungsabschnitten, die besonders anzupassen, zu fertigen und bereitzuhalten sowie für Schiebebewegungen und damit Versatz relativ zum Großraumbehälter anfällig sind, entfallen. Das erfindungsgemäße Sicherungssystem kommt allein mit der Anbringung von herkömmlichen Spanngurten ohne zusätzliche Hilfsmittel aus. Im Übrigen ist unter Spannstrang des Sicherungssystems jeder insbesondere nicht-elastische Strang in Form von Gurten, Bändern, Seilen, Ketten oder dergleichen zu verstehen, der als Bestandteil der Einspannung zur Spannbefestigung an Befestigungsstellen bildenden Fixpunkten geeignet ist. Die Spannbefestigung an den Fixpunkten der Lagerfläche kann durch jedes an sich bekannte geeignete Spannmittel vorgesehen sein, das zum Beispiel verstellbare Spannösen, Spannlaschen oder Aufwickeleinrichtungen aufweist, um den an der Lagerfläche zu befestigenden Spannstrang unter Zug festzuspannen. Die losen Enden des Spannstranges lassen sich direkt an einer insbesondere horizontalen Lagerfläche oder, gegebenenfalls zusätzlich, an einem die Lagerfläche begrenzenden Rahmen, Gestell oder dergleichen befestigen. Die Fixpunkte können also unmittelbar an der Lagerfläche oder zugehörig an der Lagerfläche benachbarten Befestigungsstellen vorgesehen sein. Der Deckelzuschnitt ist, das gegen Rückstellkraft faltbare Material bildend, vorzugsweise und üblicherweise aus Wellpappe oder dergleichen Pappe- oder Papiermaterial gefertigt. Zu dem Deckelzuschnitt gehört üblicherweise ein Großraumbehälter, dessen weitere Teile gleichfalls aus wenigstens einem Behälterzuschnitt aufrichtbar sind, der aus dem gleichen Papier- oder Pappematerial, das mit besonderem Druck belastbar ist, besteht und durch Faltlinien in Zuschnittfelder unterteilt ist, die den Behälterboden und die Seitenwandung des Großraumbehälters bilden. Die Zuschnitte werden manuell, gegebenenfalls auch automatisch aufgerichtet. Die Doppellasche ist ein relativ einfacher Bestandteil des Deckelzuschnitts, so dass der für den Großraumbehälter übliche Deckelzuschnitt ohne Weiteres mit der Ansatzlasche und der Krempellasche zu fertigen ist. Das mehreckige Bodenfeld ist üblicherweise ein reguläres Mehreck mit gleichen Randfeldern oder ein Mehreck mit im Wechsel kürzeren und längeren Randfeldern. Randfelder und damit das Mehreck können auch irregulär sein. Es ist gefunden worden, dass das übliche für die Verschlussdeckel verwendete Faltmaterial, insbesondere Wellpappe mit der üblichen Papierqualität und Grammatur verwendbar ist. Form, Faltung und Integration ermöglichen es, das Sicherungssystem ohne zusätzliche Hilfsmittel nur mit Spanngurten einzurichten, die insbesondere ohnehin an Bord von Lastkraftwagen zur Verfügung stehen. Dadurch erweist sich das erfindungsgemäße Sicherungssystem als besonders wirtschaftlich. Die Doppellasche lässt sich zum Durchführen des Spannstrangs einfach öffnen und schließen, wobei die Halteverbindung den Durchgang sicher schließt. Die Halteverbindung kann allein dadurch eine Klemmverbindung bilden, dass die Krempellasche zwischen die Arretierlasche und die Behälterwand gesetzt ist und dadurch mittels des gespannten Spannstrangs klemmend festgesetzt ist. Beim Abspannen wird Zugkraft mittels der Doppellasche verteilt und unmittelbar in den Verschlussdeckelrand eingeleitet, wobei der zum Verschlussdeckelrand parallele Durchgang den Spannstrang mit einem geraden Strangabschnitt aufnimmt. Einschneiden und Einreißen der Durchgangsöffnungen werden verhindert. Im Ganzen bestehen wesentliche Vorteile des erfindungsgemäßen Sicherungssystems und des dafür eingerichteten Deckelzuschnitts darin, dass der befüllte und mit dem aufgerichteten Verschlussdeckel verschlossene Großraumbehälter ohne herkömmlich zusätzliche Sicherungselemente einzeln oder in Gruppen nur mit Spanngurten oder dergleichen Spannsträngen mit vereinfachter, insbesondere auch Zeitaufwand reduzierender Handhabung sowie wirtschaftlich und auch unter dynamischem, Deformation bewirkendem Belastungsdruck besonders lagesicher gesichert werden kann.

Das erfindungsgemäße Sicherungssystem eignet sich besonders gut für eine gemeinsame Einspannung von wenigstens zwei Großraumbehältern, die nebeneinander auf wenigstens einem Teil ihrer Behälterböden in zur Lagerfläche senkrechter oder schräger Anordnung stehen und sich an vertikalen benachbarten Behälterwänden einander flächig, insbesondere flächengleich berühren, zu einer Behältergruppe, wobei jeder Großraumbehälter wenigstens eine genannte Doppellasche aufweist, durch die jeweils wenigstens ein, vorzugsweise dem Flachraum des Durchgangs angepasster flacher Spannstrang geführt ist. Ein besonderer Vorteil besteht darin, dass vorteilhaft durch jede Doppellasche nur ein unmittelbar mit der Lagerfläche fixierbarer Spannstrang geführt werden muss, um die Einspannung zu bilden. Vorteilhaft umfasst die Behältergruppe in gemeinsamer Einspannung wenigstens vier Großraumbehälter, vorzugsweise in Zweierreihe.

Die Einspannung lässt sich besonders wirksam und einfach dadurch gestalten, dass sich an in der Behältergruppe äußersten freiliegenden Behälterwänden von wenigstens zwei benachbarten Großraumbehältern, die vorzugsweise gleich dimensioniert sind, wenigstens zwei benachbarte Doppellaschen, vorzugsweise in gleicher Höhenebene, befinden, wobei ein Strangabschnitt wenigstens eines Spannstrangs, vorzugsweise in der gleichen Höhenebene, zwischen den benachbarten Doppellaschen und durch deren Durchgänge verläuft.

Besondere Einsparungen lassen sich dadurch erzielen, dass die in der Behältergruppe einander berührenden Behälterwände frei von den Doppellaschen sind und an wenigstens einer an der Behältergruppe äußersten freiliegenden Behälterwand eines jeden Großraumbehälters die wenigstens eine Doppellasche liegt.

Eine besondere Einspannung von einem oder insbesondere mehreren, vorteilhaft vier, Großraumbehältern einer Behältergruppe in Zweierreihe besteht darin, dass die Einspannung nur zwei Spannstränge aufweist und dass die Doppellaschen paarweise in entgegengesetzter oder diametraler Anordnung an dem einzelnen Großraumbehälter oder an der Behältergruppe vorgesehen sind, wobei die zwei Spannstränge so durch die Doppellaschen geführt sind, dass sie sich an Behälter- oder Gruppenseiten, die den Behälterseiten mit den zugehörigen Doppellaschen abgewandt sind, kreuzen und ihre Strangenden an zur Lagerfläche gehörenden Fixierstellen fixiert sind.

Im Deckelzuschnitt wird die Doppellasche besonders einfach dadurch ausgebildet, dass die Krempellasche an die Ansatzlasche parallel mit dem zugehörigen Randfeld angelenkt ist. Zweckmäßig ist die Krempellasche an die Ansatzlasche mittels einer Doppelfaltlinie angelenkt, die durch zwei nebeneinander verlaufende Laschenfaltlinien gebildet ist, deren Abstand ein Maß für eine gewünschte Flachheit des aufrichtbaren Flachraumes bildet.

Mit der Doppelfaltlinie wird insbesondere dann eine besondere Zugbelastbarkeit der Doppellasche erreicht, wenn sich die Doppelfaltlinie zu Laschenrändern der Doppellasche hin verjüngt, welche Laschenränder im zum Flachraum aufgerichteten Zustand Durchgangsöffnungen des Durchganges bilden. Die Zugbelastbarkeit kann weiter dadurch erhöht werden, dass die Doppelfaltlinie im mittleren Flächenbereich der Doppellasche vorzugsweise mit gekrümmtem Verlauf der beiden Laschenfaltlinien geweitet ist.

Die Zugbelastbarkeit der Doppellasche kann besonders durch Materialverstärkung auf einfache Weise dadurch erhöht werden, dass an wenigstens einem quer zur Bodenfaltlinie gerichteten Laschenrand der wenigstens einen Doppellasche, welcher Laschenrand im zum Flachraum aufgerichteten Zustand eine Durchgangsöffnung des Durchgangs bildet, mittels Seitenfaltlinie eine Seitenlasche angelenkt ist, wobei die wenigstens eine Laschenfaltlinie die Seitenfaltlinie quert und die Seitenlasche um 180° umfaltbar in das Innere des auffaltbaren Flachraumes hinein faltbar ist und dadurch mehrlagig einen verstärkten Wandbereich des Durchgangs des Flachraumes bildet. Vorteilhaft endet die wenigstens eine Laschenfaltlinie in der wenigstens einen Seitenlasche, die dadurch mit einem in ihr außenseitig liegenden Verstärkungssteg ausgebildet ist. Zum Verstärken der Zugbelastbarkeit lässt sich an beiden Laschenrändern der Doppellasche jeweils die Seitenlasche mittels der Seitenfaltlinie anlenken.

Eine besondere Vereinfachung der Handhabung besteht darin, dass die wenigstens eine Laschenfaltlinie eine einseitig faltende Faltlinie ist, derart, dass die Krempellasche gegen die Flächenseite der Ansatzlasche faltbar ist, die an eine Deckelinnenfläche des zugehörigen Randfeldes anschließt. Dadurch wird die Faltung in Richtung der besagten Flächenseite begünstigt. Allgemein, auch ohne einseitig faltende Laschenfaltlinie, ist es vorteilhaft, dass der Durchgang der mittels des wenigstens einen Spannstrangs abgespannten Doppellasche dadurch gebildet ist, dass die Krempellasche zwischen die Ansatzlasche und die Behälterwand unterhalb des Verschlussdeckels geklemmt ist.

Eine vorteilhafte Maßnahme besteht darin, dass die wenigstens eine Doppellasche mittels einer auf Zug belastbaren Randfaltlinie an das zugehörige Randfeld angelenkt ist. Auch dadurch wird die Handhabung besonders vereinfacht, da sich die Doppellasche zum Öffnen und Schließen von der Behälterwand wegschwenken lässt, um den Spannstrang in den Durchgang einzulegen oder daraus zu entnehmen.

Die Halteverbindung lässt sich allein oder in Verbindung mit der Klemmverbindung durch jede Arretierverbindung bilden, die die Krempellasche lösbar an der Ansatzlasche arretiert. An der Ansatzlasche und der Krempellasche kann wenigstens ein Paar komplementärer Arretierelemente zum Herstellen einer zur Halteverbindung gehörenden lösbaren Arretierverbindung ausgebildet sein, mit der die Krempellasche an der Ansatzlasche zum Sichern der Durchführung des wenigstens einen Spannstrangs lösbar festsetzbar ist. Die Arretierverbindung kann einfach durch eine Einhakverbindung gebildet sein, die wenigstens eine Arretierlasche aufweist, die an der Ansatzlasche oder der Krempellasche ausgebildet ist, und die eine zugeordnete die Arretierlasche lösbar aufnehmende Arretierausnehmung aufweist, die an der anderen Lasche, das heißt der Krempellasche oder der Ansatzlasche, ausgebildet ist. Anordnung und Ausbildung der komplementären Arretierelemente lassen sich besonders einfach und zur besonderen Arretiersicherung bei mit dem Spannstrang belasteter Doppellasche dadurch gestalten, dass sie an quer zu Bodenfaltlinie gerichteten Laschenrändern der Doppellasche ausgebildet sind, wobei die Laschenränder in dem zum Flachraum aufgerichteten Zustand Durchgangsöffnungen des Durchgangs bilden. Vorteilhaft werden Arretierausnehmungen als Randausnehmungen an der Krempellasche und Arretierlaschen an der Ansatzlasche gebildet, wobei die Arretierlaschen derart im Bereich der Laschenränder angelenkt sind, dass sie zum Arretieren und Sichern des Flachraums durch die Arretierausnehmungen setzbar sind. Eine besonders sichere Verbindung erhält man dadurch, dass die Arretierlaschen gegen die Flächenseite der Krempellasche faltbar sind, die außerhalb des Flachraumes zu liegen kommt, so dass die Arretierlaschen bei installiertem Verschlussdeckel zwischen der Krempellasche und der Behälterwandung eingeklemmt sind.

Um einen Verschlussdeckel universell zur Einzelsicherung eines Behälters sowie zur Sicherung in einer Gruppe vorzusehen, ist es vorteilhaft, dass die Doppellaschen an wenigstens einem Paar einander gegenüberliegender Randfelder des Verschlussdeckelrandes angeordnet werden.

Der Deckelzuschnitt lässt sich mit zusätzlich wenigstens einer Doppellasche in an sich üblicher Form dadurch bequem, insbesondere von Hand falten, dass die Randfelder des mehreckigen Bodenfeldes durch wenigstens zwei Paare einander gegenüberliegender Längsrandfelder und benachbarte Längsrandfelder trennende Eckrandfelder gebildet sind, wobei an wenigstens ein Längsrandfeld die wenigstens eine Doppellasche angeformt ist.

Der mit der wenigstens einen Doppellasche ausgestatte Deckelzuschnitt lässt sich in herkömmlicher Weise insbesondere manuell besonders einfach dadurch aufrichten, dass Eckwandfelder an die Eckrandfelder und Seitenfelder an die Längsrandfelder angelenkt werden, wobei die Eckwandfelder und die Eckrandfelder arretierbare Krempelwände bilden, zwischen denen wenigstens Teile der Seitenfelder bei zum Verschlussdeckelrand aufgerichteten Randfeldern unverlierbar ohne zusätzliches Befestigungsmittel klammer- und klebefrei zu liegen kommen, wobei die wenigstens eine Doppellasche an ein zugehöriges Längsrandfeld angeformt ist. Um einen solchen Deckelzuschnitt zum Lagern, Transportieren sowie besonders einfachen Aufrichten in ein mit Außenmaßen reduziertes Flachteil zu falten, können in jedem Längsrandfeld zwei schräge Faltlinien ausgebildet sein, die, ausgehend von den Ecken des Längsrandfeldes an der Bodenfaltlinie, derart schräg in das Innere des Längsrandfeldes gerichtet sind, dass sich die Randfelder im zum Verschlussdeckelrand aufgerichteten Zustand unter Beibehaltung der von den Krempelwänden eingefangenen Seitenfelder flach gegen das mehreckige Bodenfeld falten lassen, wobei die Bodenfaltlinien einen Außenrand des Flachteils bilden. Damit kommt auch die wenigstens eine Doppellasche auf das mehreckige Bodenfeld flach zu liegen.

Eine zusätzliche Einbindung der Doppellasche in die Einspannung erreicht man dadurch, dass in der Ansatzlasche und der Krempellasche Durchbrüche ausgebildet sind, die im Zustand der gegen die Ansatzlasche flachgefalteten Krempellasche an der Doppellasche einen Querdurchgang zum Durchführen eines zusätzlichen Spannstranges ausbilden, der um den sich durch den Durchgang erstreckenden Spannstrang herum greift. Diese Ausbildung ist insbesondere in Verbindung mit der an das Längsrandfeld angelenkten Doppellasche vorteilhaft.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen. Gestaltungen oder Merkmale, die übergeordnete selbstständige Relevanz haben, werden insbesondere mit der Angabe "allgemein" hervorgehoben.

Es zeigen
- Fig. 1: in axonometrischer Ansicht ein erfindungsgemäßes Sicherungssystem mit einer mittels einer Gurteinspannung eingespannten und an einer Lagerfläche gesicherten Gruppe von vier befüllten Großraumbehältern,
- Fig. 2: in Draufsicht auf die Deckelinnenfläche einen erfindungsgemäßen Deckelzuschnitt eines Verschlussdeckels, der, ein Sicherungselement mit Doppellasche bildend, jeweils Bestandteil der Großraumbehälter gemäß Fig. 1 ist und
- Fig. 3: einen der Fig. 2 entsprechenden Deckelzuschnitt mit einer zusätzlichen Ausgestaltung der Doppellaschen.

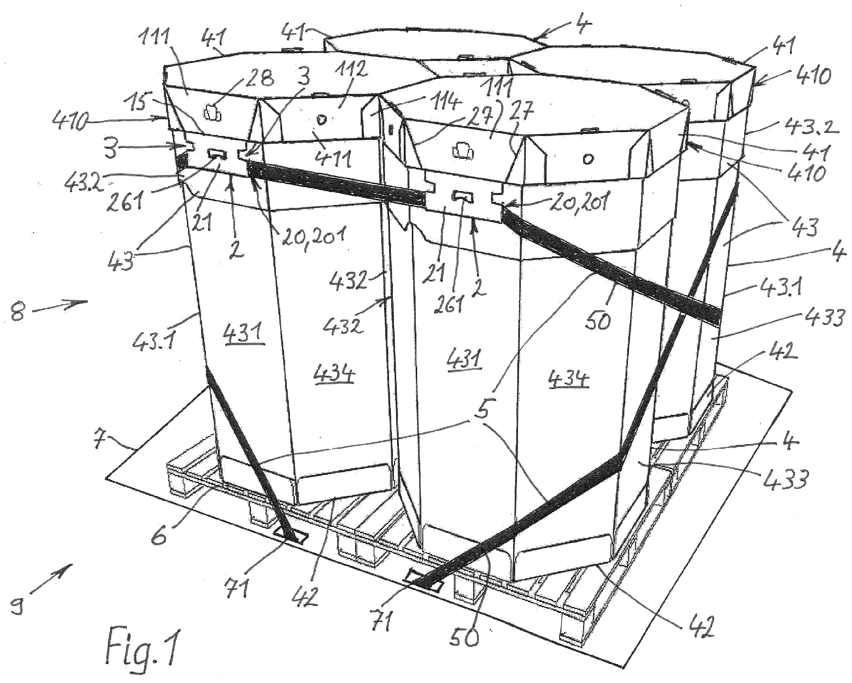

Aus Fig. 1 ist ein Sicherungssystem 9 ersichtlich, umfassend eine Behältergruppe 8 von vier gleichen achteckigen Großraumbehältern 4, eine die Großraumbehälter 4 lagernde Lagerfläche 7, eine durch zwei Spannstränge 50 gebildete Einspannung 5 sowie mit Doppellaschen 2 Sicherungselemente bildende Verschlussdeckel 41 der Großraumbehälter 4. Der Verschlussdeckel 41 und übrige Teile des Großraumbehälters 4, wie ein Behälterboden 42 und eine Behälterwandung 43, sind aus Wellpappezuschnitten oder dergleichen Materialzuschnitten aus faltbarem Material aufgerichtete Teile.

Die Großraumbehälter 4 sind vollständig befüllt und stehen zu viert in der Behältergruppe 8 nebeneinander auf ihren Behälterböden 42, wobei die Lagerung an der Lagerfläche 7 jeweils mittels einer Palette 6 erfolgt, auf die der zugehörige Großraumbehälter 4 gestellt ist. Die Großraumbehälter 4 berühren sich flächig und flächengleich an vertikalen benachbarten Behälterwänden 432. An jedem Verschlussdeckel 41 ist ein Paar der Doppellaschen 2 ausgebildet, die sich diametral gegenüberliegen und ein mit dem zugehörigen Großraumbehälter 4 integrales Verbindungsmittel zum Anbringen der Spannstränge 50 bilden.

In Fig. 1 sind an einer Vorderseite der Behältergruppe 8 an äußersten Behälterwänden 431 zwei Doppellaschen 2 zu sehen. An der gegenüberliegenden Rückseite der Behältergruppe 8 befinden sich entsprechend zwei rückwärtige Doppellaschen 2, die den vorderseitigen Doppellaschen 2 in der Gruppenanordnung diametral gegenüberliegen. Die in Fig. 1 vorderen Großraumbehälter 41 stoßen an die in der Behältergruppe 8 hinteren Großraumbehälter 41 unter Zwischenlage der nicht zu sehenden Doppellaschen an, die zu jedem diametralen Paar eines jeden Verschlussdeckels 41 gehören. Diese Doppellaschen im Inneren der Behältergruppe 8 können bei der im Ausführungsbeispiel gezeigten Vierergruppe entfallen, so dass die Verschlussdeckel 41 dann nur mit jeweils einzig der Doppellasche 2 ausgebildet sind, die zweifach an der Vorderseite bzw. der Rückseite der Behältergruppe 8 an der zugehörigen äußersten freiliegenden Behälterwand 431 angeordnet ist.

Die gleichen Großraumbehälter 4 sind im Ausführungsbeispiel reguläre Achteckbehälter, deren Behälterwandung 43 also acht gleiche Behälterwände aufweist, nämlich die Längswände bildenden Behälterwände 431, 432, weitere von Doppellaschen freie, in der Behältergruppe 8 äußerste Längswände 433 und Eckwände bildende Behälterwände 434. Jeder Großraumbehälter 4 kann auch mit einem weiteren Paar diametraler Doppellaschen 2 versehen sein, die dann an den zueinander parallelen Behälterwänden 432, 433 angeordnet sind, so dass die Behältergruppe 8, wie dies nicht dargestellt ist, an sämtlichen in der Behältergruppe 8 äußersten Behälterwänden 431, 433 mittels der Verschlussdeckel 41 mit den Doppellaschen 2 ausgestattet ist. Wieder können Doppellaschen an den innenliegenden, einander berührenden Behälterwänden 432 entfallen. Die Eckwände, die sämtlich frei von den Doppellaschen 2 sind, können, nicht dargestellt, eine längere oder vorzugsweise geringere Breite als die Längswände haben.

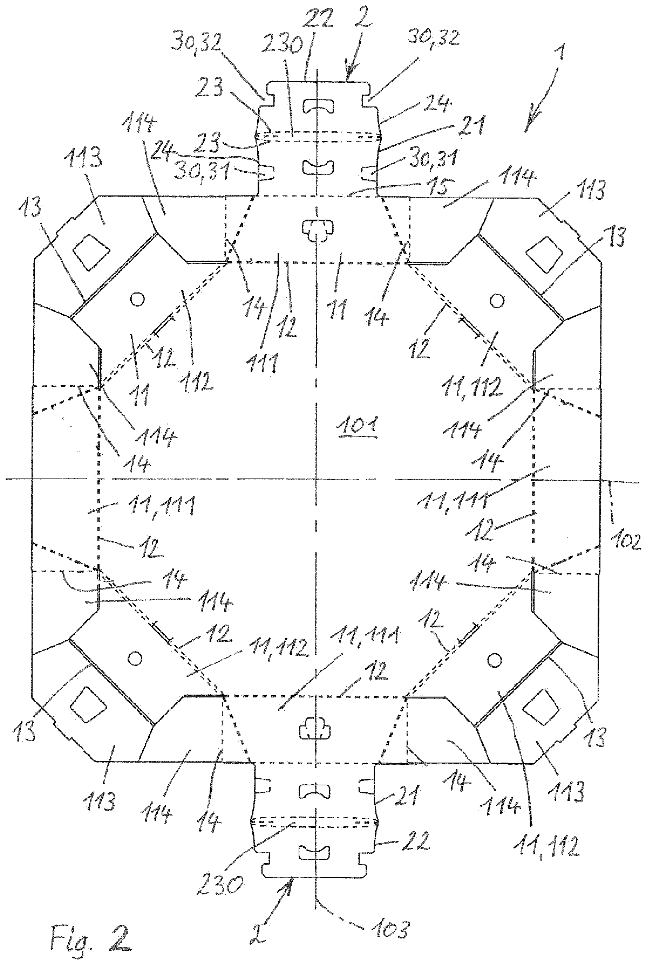

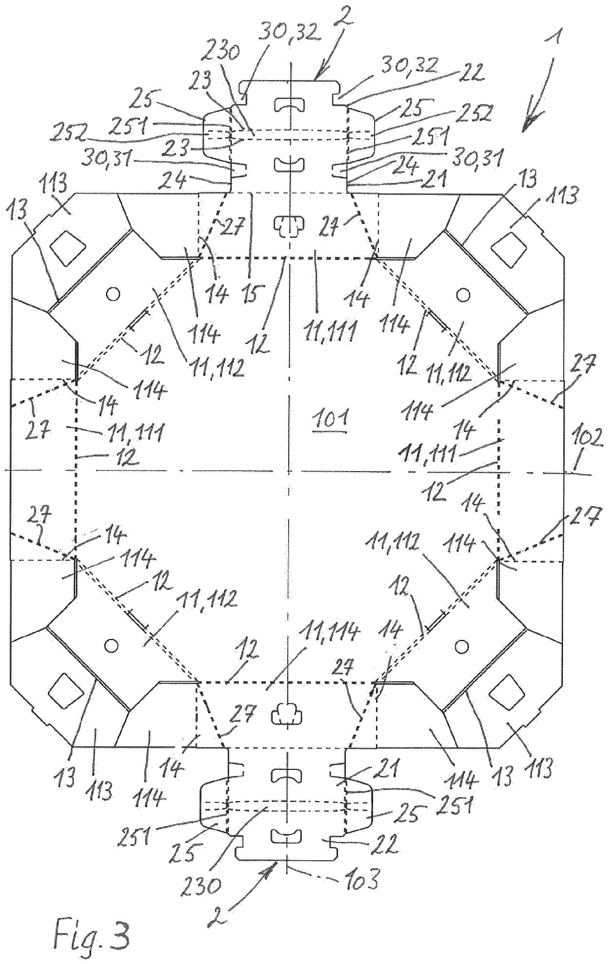

Die Doppellaschen 2 bilden, wie dies anhand der Fig. 2 und 3 noch näher beschrieben wird, jeweils in Form eines Flachraumes 20 einen Durchgang 201 aus. Der Durchgang 201 der Doppellasche 2 erstreckt sich parallel mit dem freien Rand des Verschlussdeckelrandes 410. Jede Doppellasche 2 kann allgemein, wie dargestellt, mittels einer Randfaltlinie 15 an den freien Rand des Verschlussdeckelrandes 410 angelenkt sein.

Jeder Verschlussdeckel 41 ist dadurch als Sicherungselement des Sicherungssystems 9 ausgebildet, dass jeweils die Doppellasche 2 allgemein ein einstückiger, einteiliger und damit integraler Bestandteil des Verschlussdeckelrandes 410 ist, der die durch die Behälterwände 431 bis 434 gebildete Behälterwandung 43 außen formschlüssig übergreift. Jede Doppellasche 2 ragt am freien Rand des Verschlussdeckelrandes 410 zum Behälterboden 42 hin nach unten hervor und liegt an der zugehörigen Behälterwand 431 an.

Die Einspannung 5 weist zwei durch allgemein zugfeste Spanngurte gebildete Spannstränge 50 auf. An der Vorderseite der Behältergruppe 8 verläuft der erste Spannstrang 50 in einheitlicher Höhe durch die Durchgänge 201 und zwischen diesen der dort befindlichen beiden Doppellaschen 2. Der derart geführte Spannstrang 50 lässt sich in gerader Linie einfach in die Durchgänge 201 einlegen und unverlierbar hindurchführen. Jede Doppellasche 2 ist mit einer nachstehend beschriebenen Halteverbindung 3 ausgestattet, mittels der sich der Durchgang 201 bequem schließen und öffnen lässt. Zum Schließen und Öffnen der Halteverbindung 3 ist es vorteilhaft, die Anlenkung mittels der Randfaltlinie 15 vorzusehen, so dass sich die Doppellasche 2 bei nicht gespanntem Spannstrang 50 von den Behälterwänden 431 zur Handhabung etwas abschwenken lässt. Die Randfaltlinien 15 können auch entfallen.

Der genannte erste Spannstrang 50 wird an den Doppellaschen 2 in Richtung seiner Enden nach unten unter Spannanlage an, in dieser Reiehnfolge, den Behälterwänden 431, 434 und 433 der vorderen Großraumbehälter 4 und an den Behälterwänden 433, 434 und 431 der hintern Großraumbehälter 4 abgespannt, wobei seine Enden an der Rückseite der Behältergruppe 8 zu liegen kommen und dort mit in Fig. 1 nicht zu sehenden Fixpunkten an der Lagerfläche 7 befestigt werden. Insbesondere handelt es sich bei der Lagerfläche 7 um die Ladefläche eines Lastkraftwagens. In der gleichen Weise wird der andere Spannstrang 50 an den beiden nicht zu sehenden Doppellaschen an der Rückseite der Behältergruppe 8 angebracht und geführt und mit entsprechenden Fixpunkten 71 an der Vorderseite der Behältergruppe 8 unter Zugspannung befestigt. Im Ausführungsbeispiel liegen die beiden den jeweiligen Spannstrang 50 fixierenden Fixpunkte 71 in der Nähe des bodenseitigen Bereichs der äußersten Behälterwände 431. Es resultiert, dass sich die beiden Spannstränge 50 der Einspannung 5 jeweils zwischen den Behälterwänden 433, die im Ausführungsbeispiel frei von Doppellaschen 2 sind, kreuzen und an den Behälterwänden 431 in der Nähe des Verschlussdeckels 41 und des Behälterbodens 42 gespannt verlaufen. Unterhalb des Verschlussdeckels 41 wird die Doppellasche 2 in Richtung des Behälterbodens 42 und gegen die Behälterwand 431 gedrängt. Zum Herstellen der Fixpunkte 71 kann jedes nicht dargestellte Spannmittel vorgesehen werden, um die Spannstränge 50 unter Zugspannung zu setzen. Es sind geradlinige Spannabschnitte hergestellt. Wie aus Fig. 1 ersichtlich, kann jede Doppellasche 2 allgemein zusätzlich mit einem Querdurchgang 261 ausgebildet sein, durch den jeweils ein weiterer nicht dargestellter Spannstrang hindurchführbar ist, der dann insbesondere in der Mitte des Durchgangs 201 um den Spannstrang 50 zu dessen Querabspannung nach unten herumgeführt wird.

Die Behälterwandung 43 eines Großraumbehälters 4 kann, wie dies in Fig. 1 dargestellt ist, in ein Basisteil 43.1 und ein Oberteil 43.2 unterteilt sein. Es handelt sich um einen bekannten Teleskopbehälter. Das Oberteil 43.2, auf dem der Verschlussdeckel 41 sitzt, ist teleskopartig über das Basisteil 43.1 gestülpt, um die Behälterhöhe auf die Höhe des Füllgutes mit darauf aufliegendem Verschlussdeckel 41 anzupassen. Entsprechend können die Spannstränge 50 zwischen den beiden vorderen bzw. hinteren Doppellaschen 2 auch schräg geführt sein. Das Sicherungssystem 9 ist nicht auf Teleskopbehälter beschränkt. Der Verschlussdeckel 41 eines Großraumbehälters 4 kann mit einem Verschlusselement 28 in Form einer Lasche ausgestattet sein, um an der Behälterwandung mittels einer zugeordneten Ausnehmung festgesetzt zu werden.

Jeder Verschlussdeckel 41 wird aus einem in Fig. 2 dargestellten Deckelzuschnitt 1 aufgerichtet, der mit den Doppellaschen 2 das Sicherungselement im vorgefertigten Zustand ausbildet. Der Deckelzuschnitt 1, der aus gegen Rückstellkraft faltbarem Material, nämlich Wellpappe oder dergleichen Faltmaterial besteht, ist im Ausführungsbeispiel in seiner Grundform durch einen üblichen achteckigen Zuschnitt gebildet. An ein achteckiges Bodenfeld 101 sind über vorgefertigte gleich lange Bodenfaltlinien 12 Randfelder 11 angelenkt, die im aufgerichteten Zustand den Verschlussdeckelrand 410 bilden. Die Randfelder 11 sind durch zwei Paar einander gegenüberliegender Längsrandfelder 111 und diese voneinander trennende Eckrandfelder 112 gebildet. An die Eckrandfelder 112 sind Eckwandfelder 113 angelenkt. An die Längsrandfelder 111 sind Seitenfelder 114 angelenkt. Die Eckwandfelder 113 und die Eckrandfelder 112 bilden arretierbare Krempelwände 411, zwischen denen Teile der Seitenfelder 114 bei den zum Verschlussdeckelrand 410 aufgerichteten Randfeldern 11 unverlierbar zu liegen kommen. Die genannten Felder sind in Bezug auf Mittenlinien 102, 103 des Deckelzuschnitts 1 symmetrisch ausgebildet. Diese Symmetrie ist nicht notwendig. Der Verschlussdeckelrand 410 ist selbsthaltend, da die Seitenfelder 114 jeweils zwischen dem Eckrandfeld 112 und dem Eckwandfeld 113 der Krempelwand 411 gefangen sind.

Eine weitere, an sich bekannte Grundgestaltung besteht im Ausführungsbeispiel darin, dass in jedem Längsrandfeld 111 zwei schräge Faltlinien 27 ausgebildet sind, die von den Ecken des Längsrandfeldes 111 an der Bodenfaltlinie 12 ausgehen und schräg in das Innere des Längsrandfeldes 111 gerichtet sind. Im zum Verschlussdeckelrand 410 aufgerichteten Zustand lassen sich mittels dieser schrägen Faltlinien 27 die Randfelder 11 zur Faltung eines Flachteils flachliegend gegen das mehreckige Bodenfeld 101 falten, wobei die Bodenfaltlinien 12 einen Außenrand des Flachteils bilden.

Der im Ausführungsbeispiel dargestellte Deckelzuschnitt, doch auch unabhängig von dieser Ausführung jeder andere Deckelzuschnitt mit paarigen, einander gegenüberliegenden Randfeldern oder Längsrandfeldern, wird erfindungsgemäß durch eine Anformung der integralen Doppellaschen 2 bestimmt. Der Deckelzuschnitt 1 gemäß Fig. 2 weist zwei am Deckelzuschnitt 1 diametral einander gegenüberliegende Doppellaschen 2 auf, die jeweils an dem zugehörigen Randfeld 11, gebildet durch das Längsrandfeld 111 im flachliegenden Deckelzuschnitt 1 nach außen hervorragen. Der Deckelzuschnitt kann auch mit nur einer Doppellasche oder mit mehr als zwei Doppellaschen ausgebildet sein.

Jede Doppellasche 2 ist allgemein durch eine an dem Längsrandfeld 111 hervorspringende, im Deckelzuschnitt 1 eine Innenlasche bildende Ansatzlasche 21 und durch eine im Deckelzuschnitt 1 eine Außenlasche bildende Krempellasche 22 gebildet. Die Krempellasche 22 ist parallel mit dem zugehörigen Längsrandfeld 11 an die Ansatzlasche 21 mittels einer Doppelfaltlinie 230, die durch zwei nebeneinander verlaufende Laschenfaltlinien 23 gebildet ist, zum Falten gegen die Ansatzlasche 21 um im Wesentlich 180° umfaltbar angelenkt. Mittels der Umfaltung lässt sich zwischen der Ansatzlasche 21 und der Krempellasche 22 der Flachraum 20 bilden, der parallel mit dem zugehörigen Längsrandfeld 111 den Durchgang 201 zum Durchführen des Spannstranges 50 bildet.

Die Doppelfaltlinie 230 verjüngt sich zu den Laschenrändern 24 und ist im mittleren Flächenbereich der Doppellasche 2 geweitet. Die Doppelfaltlinie 230 ist vorteilhaft allgemein eine einseitig faltende Doppelfaltlinie, die das Falten der Krempellasche 22 gegen die Fläche der Ansatzlasche 21 begünstigt, die an die Deckelinnenfläche des zugehörigen Längsrandfeldes 11 anschließt. Zur Bildung des Durchgangs 201 der abgespannten Doppellasche 2 kommt die Krempellasche 22 dann zwischen der Ansatzlasche 21 und der Behälterwand klemmend zu liegen. Diese Klemmfaltung, die in Fig. 1 zu sehen ist, wird allgemein auch ohne einseitig faltende Doppellinie mit einer oder zwei Laschenfaltlinien 23 bevorzugt. Die Halteverbindung 3 kann allein mittels dieser Klemmfaltung hergestellt werden. Die Krempellasche wird an der Arretierlasche klemmend festgesetzt. Die Doppellasche 2 ist mittels einer Randfaltlinie 15 an das zugehörige Längsrandfeld 111 angelenkt. Diese Anlenkung kann entfallen. Im Ausführungsbeispiel mit dem durch die Faltlinien 27 gebildeten Flachteil lässt sich die Doppellasche 2 stets flachgelegt oder auch gefaltet zur Anlage an das Bodenfeld 101 bringen.

Im Ausführungsbeispiel ist eine zu der Halteverbindung 3 gehörende Arretierverbindung zwischen der Ansatzlaschen 21 und der Krempellasche 22 ausgebildet. Damit lässt sich der Durchgang 201 unabhängig von der oder ohne Klemmverbindung schließen und öffnen. Die Arretierverbinung weist zwei Paar komplementärer Arretierelemente 30 auf, die eine Einhakverbindung bilden. Arretierlaschen 31 sind an der Ansatzlasche 21 und diese lösbar aufnehmende Arretierausnehmungen 32 an der Krempellasche 22 ausgebildet. Die Arretierelemente 30 sind an quer zur Bodenfaltlinie 12 gerichteten freien Laschenrändern 24 ausgebildet, die in dem zum Flachraum 20 aufgerichteten Zustand Durchgangsöffnungen des Durchgangs 201 bilden. Die Arretierlaschen 31 sind im Bereich der Laschenränder 24 so ausgebildet und angeordnet, dass sie im Zustand des aufgerichteten Flachraumes 20 zum Arretieren durch die Arretierausnehmungen 32 setzbar sind. Die Arretierlaschen 31 sind gegen die Seitenfläche der Krempellasche 22 faltbar, die außerhalb des Flachraumes 20 zu liegen kommt. Bei der genannten, zur Halteverbindung gehörenden Klemmfaltung sind die Arretierlaschen 31 zwischen der Behälterwand und der Krempellasche 22 eingeklemmt, wie aus Fig. 1 ersichtlich.

Ein in Fig. 3 dargestellter Deckelzuschnitt 1 entspricht dem Deckelzuschnitt in Fig. 2 mit der Ausnahme, dass jede Doppellasche 2 zusätzlich mit einem Paar Seitenlaschen 25 ausgestattet ist, um den Durchgang 201 besonders zu festigen. An jedem Laschenrand 24 ist mittels einer Seitenfaltlinie 251 eine der Seitenlaschen 25 angelenkt. Die Doppelfaltlinie 230 quert jede Seitenfaltlinie 251 und endet in den beiden Seitenlaschen 25. Es entsteht in jeder Seitenlasche 25 ein in ihr außenseitig liegender Verstärkungssteg 252. Jeden Seitenlasche 25 ist um 180° umfaltbar in das Innere des auffaltbaren Flachraumes 20 hineinfaltbar. Dadurch entsteht mehrlagig ein verstärkter Wandbereich des Durchgangs 201.

## Patentansprüche

1. Sicherungssystem, das die Lagerung wenigstens eines befüllten Großraumbehälters (4) an einer Lagerfläche (7) sichert, umfassend den Großraumbehälter (4), ein Sicherungselement, das an einer Behälteroberseite (44), einem Behälterboden (42) gegenüberliegend, angeordnet ist, die Lagerfläche (7) und eine Einspannung (5) mittels Spannstrang, **dadurch gekennzeichnet, dass** das Sicherungselement durch ein als Verschlussdeckel (41) ausgebildetes Abdeckteil mit einem Rand gebildet ist, wobei die Einspannung (5) zur Spannbefestigung des Großraumbehälters (4) mit dem Rand und mit Fixpunkten (71) der Lagerfläche (7) oder dieser zugeordneten Fixpunkten verbunden ist, und wobei der Verschlussdeckel (41) zum Schließen einer Befüllungsöffnung an der Behälteroberseite (44) ein notwendiger Bestandteil des Großraumbehälters (4) ist, der aus wenigstens einem Zuschnitt aus gegen Rückstellkraft faltbarem Material aufgerichtet ist, wobei der Verschlussdeckel (41) einen, einen Öffnungsrand der Befüllungsöffnung formschlüssig übergreifenden Verschlussdeckelrand (410) aufweist, dass der Verschlussdeckel (41) durch einen Deckelzuschnitt (1) aus gegen Rückstellkraft faltbarem Material gebildet ist, der mit um vorgefertigte Bodenfaltlinien (12) faltbaren, den Verschlussdeckelrand (410) bildenden Randfeldern (11) aufrichtbar ist, und dass wenigstens eine an dem Verschlussdeckelrand (410) hervorstehende, Bestandteil des Deckelzuschnitts (1) bildende Doppellasche (2) gebildet ist, die eine von dem Verschlussdeckelrand (410) abstehende Ansatzlasche (21) und eine an der Ansatzlasche (21) angelenkte und dagegen gefaltete Krempellasche (22) aufweist, die in einer Halteverbindung (3) lösbar aneinander festgesetzt sind und dadurch einen Flachraum (20) mit einem Durchgang (201) ausbilden, durch den wenigstens ein gespannter Spannstrang (50) der Einspannung (5) unverlierbar hindurchgeführt ist, wobei der wenigstens eine Spannstrang (50) so geführt ist, dass die Doppellasche (2) in Richtung des Behälterbodens (42) und gegen eine Behälterwand (431) des Großraumbehälters (4) unterhalb des Verschlussdeckelrandes (410) gedrängt wird.

2. System nach Anspruch 1, **dadurch gekennzeichnet, dass** der Durchgang (201) der mittels des wenigstens einen Spannstrangs (50) abgespannten Doppellasche (2) dadurch gebildet ist, dass die Krempellasche (22) zwischen die Ansatzlasche (21) und einer Behälterwand (431) unterhalb des Verschlussdeckelrandes (410) geklemmt ist.

3. System nach Anspruch 1 oder 2, **dadurch gekennzeichnet, dass** der wenigstens eine Großraumbehälter (4) aus einem Behälterzuschnitt aufgerichtet ist, der aus faltbarem Material besteht und durch Faltlinien in Zuschnittfelder unterteilt ist, die den Behälterboden (42) und eine Behälterwandung (43) des Großraumbehälters (4) bilden.

4. System nach einem der Ansprüche 1 bis 3, **dadurch gekennzeichnet, dass** wenigstens zwei Großraumbehälter (4), die nebeneinander auf ihren Behälterböden (42) stehen und die sich an vertikalen benachbarten Behälterwänden (432) einander berühren, in der Einspannung (5) zu einer Behältergruppe (8) aneinander gespannt sind, wobei jeder Großraumbehälter (4) wenigstens eine genannte Doppellasche (2) aufweist, durch die jeweils wenigstens ein Spannstrang (50) geführt ist.

5. System nach Anspruch 4, **dadurch gekennzeichnet, dass** die Behältergruppe (8) wenigstens vier Großraumbehälter (4) umfasst.

6. System nach Anspruch 4 oder 5, **dadurch gekennzeichnet, dass** sich an in der Behältergruppe (8) äußersten freiliegenden Behälterwänden (431) von wenigstens zwei benachbarten Großraumbehältern (4) wenigstens zwei benachbarte Doppellaschen (2) vorzugsweise in gleicher Höhenebene befinden, wobei ein Strangabschnitt wenigstens eines Spannstrangs (50) vorzugsweise in der gleichen Höhenebene zwischen den benachbarten Doppellaschen (2) verläuft.

7. System nach einem der Ansprüche 4 bis 6, **dadurch gekennzeichnet, dass** die in der Behältergruppe (8) einander berührenden Behälterwände (432) frei von den Doppellaschen (2) sind und an wenigstens einer an der Behältergruppe (8) äußersten freiliegenden Behälterwand (431) eines jeden Großraumbehälters (4) die wenigstens eine Doppellasche (2) liegt.

8. System nach einem der Ansprüche 1 bis 7, **dadurch gekennzeichnet, dass** wenigstens ein Spannstrang (50) der Einspannung (5), der durch den Durchgang (201) der wenigstens einen Doppellasche (2) des zugehörigen Großraumbehälters (4) geführt ist, an seinen Enden an Fixpunkten der Lagerfläche (7) oder an der Lagerfläche zugeordneten Fixpunkten unter Zugspannung befestigt ist.

9. System nach einem der Ansprüche 1 bis 8, **dadurch gekennzeichnet, dass** die Einspannung (5) nur zwei Spannstränge (50) aufweist und dass die Doppellaschen (2) paarweise in entgegengesetzter oder diametraler Anordnung an dem einen Großraumbehälter (4) oder an einer Behältergruppe (8), in der mehrere Großraumbehälter (4) nebeneinander stehen und sich berühren, vorgesehen sind, wobei die zwei Spannstränge (50) so durch die Doppellaschen (2) geführt sind, dass sie sich kreuzen und ihre Strangenden an der Lagerfläche (7) fixiert sind.

10. System nach einem der Ansprüche 1 bis 9, **dadurch gekennzeichnet, dass** die Lagerfläche (7) die Ladefläche eines Fahrzeugs ist, gegen die der wenigstens eine Großraumbehälter (4) in der Einspannung (5) direkt oder auf einer Palette (6) stehend gespannt gehalten ist.

11. Deckelzuschnitt (1) eines Verschlussdeckels (41), der zum Verschließen einer oberseitigen Befüllungsöffnung eines zu dem Verschlussdeckel (41) gehörenden Großraumbehälters (4) eingerichtet ist, wobei der Deckelzuschnitt (1), der aus gegen Rückstellkraft faltbarem Material besteht, ein mehreckiges Bodenfeld (101) aufweist, an das über vorgefertigte Bodenfaltlinien (12) Randfelder (11) angelenkt sind, die im aufgerichteten Zustand einen Verschlussdeckelrand (410) zum formschlüssigen Übergreifen eines Öffnungsrandes der Befüllungsöffnung des Großraumbehälters (4) bilden, **dadurch gekennzeichnet, dass** der Deckelzuschnitt (1) im zum Verschlussdeckel (41) aufgerichteten, den zugehörigen Großraumbehälter (4) schließenden Zustand ein Sicherungselement eines Sicherungssystems (9), insbesondere nach einem der Ansprüche 1 bis 10, bildet, das den befüllten Großraumbehälter (4) an einer Lagerfläche (7) mittels einer den Verschlussdeckel (41) mit Fixpunkten der Lagerfläche (7) verbindenden Einspannung (5) sichert, wobei der Deckelzuschnitt (1) wenigstens eine an einem zugehörigen Randfeld (11) hervorragende Doppellasche (2) aufweist, die durch ein an dem zugehörigen Randfeld (11) hervorspringende, im Deckelzuschnitt (1) eine Innenlasche bildende Ansatzlasche (21) und durch eine im Deckelzuschnitt (1) eine Außenlasche bildende Krempellasche (22) gebildet ist, die mittels wenigstens einer Laschenfaltlinie (23) an die Ansatzlasche (21) derart zum Falten gegen die Ansatzlasche (21) angelenkt ist, dass im aufgerichteten Zustand ein Flachraum (20) resultiert, der, parallel mit dem zugehörigen Randfeld (11) einen Durchgang (201) zum Durchführen wenigstens eines Spannstranges (50) der Einspannung (5) des Sicherungssystems (9) bildet.

12. Deckelzuschnitt nach Anspruch 11, **dadurch gekennzeichnet, dass** an der Ansatzlasche (21) und der Krempellasche (22) wenigstens ein Paar komplementärer Arretierelemente (30) zum Herstellen einer zu einer Halteverbindung (3) gehörenden lösbaren Arretierverbindung ausgebildet ist, mit der die Krempellasche (22) an der Ansatzlasche (21) zum Sichern der Durchführung des wenigstens einen Spannstrangs (50) lösbar festsetzbar ist.

13. Deckelzuschnitt nach Anspruch 11 oder 12, **dadurch gekennzeichnet, dass** die Krempellasche (22) an die Ansatzlasche (21) parallel mit dem zugehörigen Randfeld (11) angelenkt ist.

14. Deckelzuschnitt nach einem der Ansprüche 11 bis 13, **dadurch gekennzeichnet, dass** die Krempellasche (22) an die Ansatzlasche (21) mittels einer Doppelfaltlinie (230) angelenkt ist, die durch zwei nebeneinander verlaufende Laschenfaltlinien (23) gebildet ist, deren Abstand ein Maß für die Flachheit des aufrichtbaren Flachraumes (20) bildet.

15. Deckelzuschnitt nach Anspruch 14, **dadurch gekennzeichnet, dass** sich die Doppelfaltlinie (230) zu Laschenrändern (24) der Doppellasche (2) hin verjüngt, welche Laschenränder (24) im zum Flachraum (20) aufgerichteten Zustand Durchgangsöffnungen des Durchganges (201) bilden.

16. Deckelzuschnitt nach Anspruch 14 oder 15, **dadurch gekennzeichnet, dass** die Doppelfaltline (230) im mittleren Flächenbereich der Doppellasche (2) geweitet ist.

17. Deckelzuschnitt nach einem der Ansprüche 11 bis 16, **dadurch gekennzeichnet, dass** die wenigstens eine Laschenfaltlinie (23) eine einseitig faltende Faltlinie ist, derart, dass die Krempellasche (22) gegen die Fläche der Ansatzlasche (21) faltbar ist, die an eine Deckelinnenfläche des zugehörigen Randfeldes (11) anschließt.

18. Deckelzuschnitt nach einem der Ansprüche 11 bis 17, **dadurch gekennzeichnet, dass** die wenigstens eine Doppellasche (2) mittels einer Randfaltlinie (15) an das zugehörige Randfeld (11) angelenkt ist.

19. Deckelzuschnitt nach einem der Ansprüche 11 bis 18, **dadurch gekennzeichnet, dass** an wenigstens einem quer zur Bodenfaltlinie (12) gerichteten Laschenrand (24) der wenigstens einen Doppellasche (2), welcher Laschenrand (24) im zum Flachraum (20) aufgerichteten Zustand eine Durchgangsöffnung des Durchgangs (201) bildet, mittels einer Seitenfaltlinie (251) eine Seitenlasche (25) angelenkt ist, wobei die wenigstens eine Laschenfaltlinie (23) die Seitenfaltlinie (251) quert und die Seitenlasche (25) um 180° umfaltbar in das Innere des auffaltbaren Flachraumes (20) hinein faltbar ist und dadurch mehrlagig einen verstärkten Wandbereich des Durchgangs (201) des Flachraumes (20) bildet.

20. Deckelzuschnitt nach Anspruch 19, **dadurch gekennzeichnet, dass** die Laschenfaltlinie (23) in der wenigstens einen Seitenlasche (25) endet und dadurch die Seitenlasche (25) mit einem in ihr außenseitig liegenden Verstärkungssteg (252) ausbildet.

21. Deckelzuschnitt nach Anspruch 19 oder 20, **dadurch gekennzeichnet, dass** an beiden Laschenrändern (24) jeweils eine Seitenlasche (25) mittels einer Seitenfaltlinie (251) angelenkt ist.

22. Deckelzuschnitt nach Anspruch 12, **dadurch gekennzeichnet, dass** die Arretierverbindung durch eine Einhakverbindung gebildet ist, die wenigstens eine Arretierlasche (31) aufweist, die an der Ansatzlasche (21) oder der Krempellasche (22) ausgebildet ist, und die eine zugeordnete, die Arretierlasche (31) lösbar aufnehmende Arretierausnehmung (32) aufweist, die an der anderen Lasche, das heißt der Krempellasche (22) oder der Ansatzlasche (21), ausgebildet ist.

23. Deckelzuschnitt nach Anspruch 12, **dadurch gekennzeichnet, dass** die komplementären Arretierelemente (30) zum Herstellen der Arretierverbindung (3) an quer zur Bodenfaltline (12) gerichteten Laschenrändern (24) der Doppellasche (2), welche Laschenränder (24) in dem zum Flachraum (20) aufgerichteten Zustand Durchgangsöffnungen des Durchgangs (201) bilden, ausgebildet sind.

24. Deckelzuschnitt nach Anspruch 23, **dadurch gekennzeichnet, dass** die Arretierelemente (30) durch Arretierausnehmungen (32), die Randausnehmungen an der Krempellasche (22) sind, und durch Arretierlaschen (31) an der Ansatzlasche (21) gebildet sind, wobei die Arretierlaschen (31) derart im Bereich der Laschenränder (24) angelenkt sind, dass sie zum Arretieren und Sichern des Flachraumes (20) durch die Arretierausnehmungen (32) setzbar sind.

25. Deckelzuschnitt nach einem der Ansprüche 22 bis 24, **dadurch gekennzeichnet, dass** die Arretierlaschen (31) gegen die Seitenfläche der Krempellasche (22) faltbar sind, die außerhalb des Flachraumes (20) zu liegen kommt.

26. Deckelzuschnitt nach einem der Ansprüche 11 bis 25, **dadurch gekennzeichnet, dass** Doppellaschen (2) an wenigstens einem Paar einander gegenüberliegender Randfelder (11) des Verschlussdeckelrandes (410) angeordnet sind.

27. Deckelzuschnitt nach einem der Ansprüche 11 bis 26, **dadurch gekennzeichnet, dass** die Randfelder (11) des mehreckigen Bodenfeldes (101) durch wenigstens zwei Paare einander gegenüberliegender Längsrandfelder (111) und benachbarte Längsrandfelder (111) trennende Eckrandfelder (112) gebildet sind, wobei an wenigstens ein Längsrandfeld (111) die wenigstens eine Doppellasche (2) angeformt ist.

28. Deckelzuschnitt nach Anspruch 27, **dadurch gekennzeichnet, dass** Eckwandfelder (113) an die Eckrandfelder (112) und Seitenfelder (114) an die Längsrandfelder (111) angelenkt sind, wobei die Eckwandfelder (113) und die Eckrandfelder (112) arretierbare Krempelwände (411) bilden, zwischen denen wenigstens Teile der Seitenfelder (114) bei zum Verschlussdeckelrand (410) aufgerichteten Randfeldern (11) unverlierbar zu liegen kommen.

29. Deckelzuschnitt nach Anspruch 28, **dadurch gekennzeichnet, dass** in jedem Längsrandfeld (111) zwei schräge Faltlinien (27) ausgebildet sind, die ausgehend von den Ecken des Längsrandfeldes (111) an der Bodenfaltlinie (12), derart schräg in das Innere des Längsrandfeldes (111) gerichtet sind, dass sich die Randfelder (11) im zum Verschlussdeckelrand (410) aufgerichteten Zustand zur Faltung eines Flachteils flachliegend gegen das mehreckige Bodenfeld (101) falten lassen, wobei die Bodenfaltlinien (12) einen Außenrand des Flachteils bilden.

30. Deckelzuschnitt nach einem der Ansprüche 11 bis 29, **dadurch gekennzeichnet, dass** in der Ansatzlasche (21) und der Krempellasche (22) Durchbrüche (26) ausgebildet sind, die im Zustand der gegen die Ansatzlasche (21) flach gefalteten Krempellasche (22) an der Doppellasche (2) einen Querdurchgang (261) zum Durchführen eines Spannstranges ausbilden.

## Claims

1. Securing system which secures the storage of at least one filled large-capacity container (4) on a storage surface (7), comprising the large-capacity container (4), a securing element which is arranged on a container upper side (44) opposite a container base (42), the storage surface (7) and a restraint (5) by means of a tension strap, **characterised in that** the securing element is formed by a cover part in the form of a closure lid (41) having a rim, wherein the restraint (5), for the tensioned fastening of the large-capacity container (4), is connected to the rim and to fixing points (71) of the storage surface (7) or fixing points associated therewith, and wherein the closure lid (41), for closing a filling opening on the container upper side (44), is a necessary part of the large-capacity container (4) which is erected from at least one blank of material that is foldable against restoring force, wherein the closure lid (41) has a closure lid rim (410) which engages positively over an opening rim of the filling opening, **in that** the closure lid (41) is formed by a lid blank (1) of material that is foldable against restoring force, which lid blank can be erected with rim zones (11) which are foldable about preformed base fold lines (12) and form the closure lid rim (410), and **in that** there is formed at least one double flap (2) which projects from the closure lid rim (410) and forms part of the lid blank (1) and which has a base flap (21) protruding from the closure lid rim (410) and a fold-over flap (22) which is hinged to and folded against the base flap (21), which flaps are releasably fixed to one another in a retaining connection (3) and thereby form a shallow space (20) with a passage (201) through which at least one tight tension strap (50) of the restraint (5) is captively guided, wherein the at least one tension strap (50) is so guided that the double flap (2) is urged in the direction towards the container base (42) and against a container wall (431) of the large-capacity container (4) beneath the closure lid rim (410).

2. System according to claim 1, **characterised in that** the passage (201) of the double flap (2) anchored by means of the at least one tension strap (50) is formed such that the fold-over flap (22) is clamped between the base flap (21) and a container wall (431) beneath the closure lid rim (410).

3. System according to claim 1 or 2, **characterised in that** the at least one large-capacity container (4) is erected from a container blank which consists of foldable material and is divided by fold lines into blank zones which form the container base (42) and a container wall (43) of the large-capacity container (4).

4. System according to any one of claims 1 to 3, **characterised in that** at least two large-capacity containers (4) which stand next to one another on their container bases (42) and which touch one another at vertical adjacent container walls (432) are clamped together in the restraint (5) to form a container group (8), wherein each large-capacity container (4) has at least one mentioned double flap (2) through which in each case at least one tension strap (50) is guided.

5. System according to claim 4, **characterised in that** the container group (8) comprises at least four large-capacity containers (4).

6. System according to claim 4 or 5, **characterised in that** at least two adjacent double flaps (2) are situated preferably in the same vertical plane at exposed container walls (431) that are outermost in the container group (8) of at least two adjacent large-capacity containers (4), wherein a strap portion of at least one tension strap (50) runs between the adjacent double flaps (2) preferably in the same vertical plane.

7. System according to any one of claims 4 to 6, **characterised in that** the container walls (432) in the container group (8) that touch one another are free of double flaps (2) and the at least one double flap (2) is located at at least one exposed container wall (431) that is outermost in the container group (8) of each large-capacity container (4).

8. System according to any one of claims 1 to 7, **characterised in that** at least one tension strap (50) of the restraint (5) which is guided through the passage (201) of the at least one double flap (2) of the associated large-scale container (4) is fastened under tension at its ends to fixing points of the storage surface (7) or to fixing points associated with the storage surface.

9. System according to any one of claims 1 to 8, **characterised in that** the restraint (5) has only two tension straps (50), and **in that** the double flaps (2) are provided in pairs in an opposing or diametral arrangement on one large-capacity container (4) or on a container group (8) in which a plurality of large-capacity containers (4) stand next to one another and touch one another, wherein the two tension straps (50) are guided through the double flaps (2) in such a manner that they cross and their strap ends are fixed to the storage surface (7).

10. System according to any one of claims 1 to 9, **characterised in that** the storage surface (7) is the loading surface of a vehicle against which the at least one large-capacity container (4) is held clamped in the restraint (5) directly or standing on a pallet (6).

11. Lid blank (1) of a closure lid (41) which is adapted to close a top filling opening of a large-capacity container (4) belonging to the closure lid (41), wherein the lid blank (1), which consists of material that is foldable against restoring force, has a polygonal base zone (101) to which there are hinged *via* preformed base fold lines (12) rim zones (11) which, in the erected state, form a closure lid rim (410) for positive engagement over an opening rim of the filling opening of the large-capacity container (4), **characterised in that** the lid blank (1), in the state in which it is erected to form the closure lid (41) and closes the associated large-capacity container (4), forms a securing element of a securing system (9), in particular according to any one of claims 1 to 10, which secures the filled large-capacity container (4) to a storage surface (7) by means of a restraint (5) which connects the closure lid (41) to fixing points of the storage surface (7), wherein the lid blank (1) has at least one double flap (2) which protrudes from an associated rim zone (11) and is formed by a base flap (21), which projects from the associated rim zone (11) and forms an inner flap in the lid blank (1), and by a fold-over flap (22), which forms an outer flap in the lid blank (1), which fold-over flap is hinged to the base flap (21) by means of at least one flap fold line (23) for folding against the base flap (21) in such a manner that, in the erected state, there is obtained a shallow space (20) which, parallel to the associated rim zone (11), forms a passage (201) for the passage of at least one tension strap (50) of the restraint (5) of the securing system (9).

12. Lid blank according to claim 11, **characterised in that** there is formed on the base flap (21) and the fold-over flap (22) at least one pair of complementary locking elements (30) for establishing a releasable locking connection belonging to a retaining connection (3), with which locking connection the fold-over flap (22) can releasably be fixed to the base flap (21) for securing the passage of the at least one tension strap (50).

13. Lid blank according to claim 11 or 12, **characterised in that** the fold-over flap (22) is hinged to the base flap (21) parallel to the associated rim zone (11).

14. Lid blank according to any one of claims 11 to 13, **characterised in that** the fold-over flap (22) is hinged to the base flap (21) by means of a double fold line (230) which is formed by two flap fold lines (23) extending next to one another, the spacing of which forms a measure of the shallowness of the erectable shallow space (20).

15. Lid blank according to claim 14, **characterised in that** the double fold line (230) tapers towards flap edges (24) of the double flap (2), which flap edges (24) form through-openings of the passage (201) in the state erected to form the shallow space (20).

16. Lid blank according to claim 14 or 15, **characterised in that** the double fold line (230) is widened in the central surface region of the double flap (2).

17. Lid blank according to any one of claims 11 to 16, **characterised in that** the at least one flap fold line (23) is a fold line that folds on one side, such that the fold-over flap (22) is foldable against the surface of the base flap (21) which adjoins a lid inner surface of the associated rim zone (11).

18. Lid blank according to any one of claims 11 to 17, **characterised in that** the at least one double flap (2) is hinged to the associated rim zone (11) by means of a rim fold line (15).

19. Lid blank according to any one of claims 11 to 18, **characterised in that** a side flap (25) is hinged by means of a side fold line (251) to at least one flap edge (24), oriented transversely to the base fold line (12), of the at least one double flap (2), which flap edge (24) in the state erected to form the shallow space (20) forms a through-opening of the passage (201), wherein the at least one flap fold line (23) crosses the side fold line (251) and the side flap (25) can be folded through 180° into the interior of the foldable shallow space (20) and thereby forms, in a multilayer manner, a reinforced wall region of the passage (201) of the shallow space (20).

20. Lid blank according to claim 19, **characterised in that** the flap fold line (23) ends in the at least one side flap (25) and thereby forms the side flap (25) with a reinforcing web (252) located externally therein.

21. Lid blank according to claim 19 or 20, **characterised in that** a side flap (25) is hinged to each of the two flap edges (24) by means of a side fold line (251).

22. Lid blank according to claim 12, **characterised in that** the locking connection is formed by a hook-in connection which has at least one locking flap (31) which is formed on the base flap (21) or the fold-over flap (22) and which has an associated locking recess (32) which receives the locking flap (31) in a releasable manner, which locking recess is formed on the other flap, that is to say the fold-over flap (22) or the base flap (21).

23. Lid blank according to claim 12, **characterised in that** the complementary locking elements (30) for producing the locking connection (3) are formed on flap edges (24) of the double flap (2) which are oriented transversely to the base fold line (12), which flap edges (24) in the state erected to form the shallow space (20) form through-openings of the passage (201).

24. Lid blank according to claim 23, **characterised in that** the locking elements (30) are formed by locking recesses (32), which are rim recesses on the fold-over flap (22), and by locking flaps (31) on the base flap (21), wherein the locking flaps (31) are hinged in the region of the flap edges (24) in such a manner that they can be inserted through the locking recesses (32) for locking and securing the shallow space (20).

25. Lid blank according to any one of claims 22 to 24, **characterised in that** the locking flaps (31) are foldable against the side surface of the fold-over flap (22) which comes to lie outside the shallow space (20).

26. Lid blank according to any one of claims 11 to 25, **characterised in that** double flaps (2) are arranged on at least one pair of mutually opposite rim zones (11) of the closure lid rim (410).

27. Lid blank according to any one of claims 11 to 26, **characterised in that** the rim zones (11) of the polygonal base zone (101) are formed by at least two pairs of mutually opposite longitudinal rim zones (111) and corner rim zones (112) separating adjacent longitudinal rim zones (111), wherein the at least one double flap (2) is formed on at least one longitudinal rim zone (111).

28. Lid blank according to claim 27, **characterised in that** corner wall zones (113) are hinged to the corner rim zones (112) and side zones (114) are hinged to the longitudinal rim zones (111), wherein the corner wall zones (113) and the corner rim zones (112) form lockable fold-over walls (411) between which at least portions of the side zones (114) captively come to lie when the rim zones (11) are erected to form the closure lid rim (410).

29. Lid blank according to claim 28, **characterised in that** there are formed in each longitudinal rim zone (111) two oblique fold lines (27) which, starting from the corners of the longitudinal rim zone (111) at the base fold line (12), are oriented obliquely into the interior of the longitudinal rim zone (111) in such a manner that the rim zones (11), in the state erected to form the closure lid rim (410), for folding a flat part, can be folded flat against the polygonal base zone (101), wherein the base fold lines (12) form an outer edge of the flat part.

30. Lid blank according to any one of claims 11 to 29, **characterised in that** there are formed in the base flap (21) and the fold-over flap (22) apertures (26) which, in the state in which the fold-over flap (22) is folded flat against the base flap (21), form at the double flap (2) a transverse passage (261) for the passage of a tension strap.

## Revendications

1. Système de sécurisation qui sécurise le stockage d'au moins un conteneur de grande capacité (4) rempli sur une surface de stockage (7), comprenant le conteneur de grande capacité (4), un élément de sécurisation qui est agencé sur un côté supérieur de conteneur (44), opposé à un fond de conteneur (42), la surface de stockage (7) et un dispositif de serrage (5) au moyen d'une sangle de serrage, **caractérisé en ce que** l'élément de sécurisation est formé par une partie de couverture réalisée comme un couvercle de fermeture (41) avec un bord, dans lequel le dispositif de serrage (5) destiné à fixer par serrage le conteneur de grande capacité (4) est relié au bord et à des points d'attache (71) de la surface de stockage (7) ou à des points d'attache associés à celle-ci, et dans lequel le couvercle de fermeture (41) destiné à fermer une ouverture de remplissage au niveau du côté supérieur de conteneur (44) est un composant nécessaire du conteneur de grande capacité (4) qui est érigé à partir d'au moins une ébauche de matériau pliable à l'encontre d'une force de rappel, dans lequel le couvercle de fermeture (41) présente un bord (410) de couvercle de fermeture qui s'engage par complémentarité de forme avec un bord d'ouverture de l'ouverture de remplissage, **en ce que** le couvercle de fermeture (41) est formé par une ébauche (1) de couvercle de fermeture dans un matériau pliable à l'encontre d'une force de rappel, qui peut être érigée avec des zones de bord (11) pliables autour de lignes de pliage de fond (12) préconfectionnées qui forment le bord (410) de couvercle de fermeture, et **en ce qu'**il est formé d'au moins un double rabat (2) qui fait saillie du bord (410) de couvercle de fermeture et qui est un composant de l'ébauche (1) de couvercle et qui comporte un rabat de base (21) qui se projette depuis le bord (410) de couvercle de fermeture et un rabat retroussé (22) qui est articulé sur et replié contre le rabat de base (21), lesquels sont fixés l'un à l'autre d'une manière détachable dans une liaison de retenue (3), formant ainsi un espace peu profond (20) avec un passage (201) à travers lequel au moins une sangle de serrage (50) sous tension du dispositif de serrage (5) est guidée d'une manière imperdable, ladite au moins une sangle de serrage (50) sous tension étant guidée de sorte que le double rabat (2) est forcé en direction du fond de conteneur (42) et contre une paroi de conteneur (431) du conteneur de grande capacité (4) en dessous du bord (410) de couvercle de fermeture.

2. Système selon la revendication 1, **caractérisé en ce que** le passage (201) du double rabat (2) arrimé au moyen de ladite au moins une sangle de serrage (50) est formé par le rabat retroussé (22) qui est coincé entre le rabat de base (21) et une paroi de conteneur (431) en dessous du bord (410) de couvercle de fermeture.

3. Système selon la revendication 1 ou 2, **caractérisé en ce que** ledit au moins un conteneur de grande capacité (4) est érigé à partir d'une ébauche de conteneur qui est constituée d'un matériau pliable et qui est divisée en zones d'ébauche par des lignes de pliage qui forment le fond de conteneur (42) et une cloison de conteneur (43) du conteneur à grande capacité (4).

4. Système selon l'une quelconque des revendications 1 à 3, **caractérisé en ce qu'**au moins deux conteneurs de grande capacité (4), qui se trouvent l'un à côté de l'autre sur leurs fonds de conteneur (42) et qui se touchent l'un l'autre au niveau de parois de conteneur (432) verticales juxtaposées, sont serrés l'un contre l'autre dans le dispositif de serrage (5) en un groupe de conteneurs (8), dans lequel chaque conteneur de grande capacité (4) présente au moins un double rabat (2) tel que précité, à travers par lequel, dans chaque cas, au moins une sangle de serrage (50) est guidée.

5. Système selon la revendication 4, **caractérisé en ce que** le groupe de conteneurs (8) comprend au moins quatre conteneurs de grande capacité (4).

6. Système selon la revendication 4 ou 5, **caractérisé en ce qu'**au moins deux double rabats (2) juxtaposés se trouvent de préférence sur un même plan vertical au niveau de parois de conteneur (431) exposées, qui sont les plus à l'extérieur dans le groupe de conteneurs (8), d'au moins deux conteneurs de grande capacité (4) juxtaposés, dans lequel une section de sangle d'au moins une sangle de serrage (50) passe entre les double rabats (2) adjacents, de préférence dans le même plan vertical.

7. Système selon l'une quelconque des revendications 4 à 6, **caractérisé en ce que** les parois de conteneur (432) se touchant les unes les autres dans le groupe de conteneurs (8) sont exemptes des doubles rabats (2), et **en ce que** ledit au moins un double rabat (2) se trouve au niveau d'au moins une paroi de conteneur (431) exposée, qui est la plus à l'extérieur dans le groupe de conteneurs (8) de chaque conteneur de grande capacité (4).

8. Système selon l'une quelconque des revendications 1 à 7, **caractérisé en ce qu'**au moins une sangle de serrage (50) du dispositif de serrage (5), qui est guidée à travers le passage (201) dudit au moins un double rabat (2) du conteneur de grande capacité correspondant (4), est attachée sous tension de traction par ses extrémités à des points d'attache de la surface de stockage (7) ou à des points d'attache associés à la surface de stockage.

9. Système selon l'une quelconque des revendications 1 à 8, **caractérisé en ce que** le dispositif de serrage (5) ne présente que deux sangles de serrage (50), et **en ce que** les doubles rabats (2) sont prévus par paire dans un agencement opposé ou diamétral au niveau dudit un conteneur de grande capacité (4) ou au niveau d'un groupe de conteneurs (8), dans lequel une pluralité de conteneurs de grande capacité (4) se trouvent les uns à côté des autres et se touchent les uns les autres, dans lequel les deux sangles de serrage (50) sont guidées par les doubles rabats (2) de sorte qu'elles se croisent et que leurs extrémités de sangle sont attachées à la surface de stockage (7).

10. Système selon l'une quelconque des revendications 1 à 9, **caractérisé en ce que** la surface de stockage (7) est la surface de chargement d'un véhicule contre lequel ledit au moins un conteneur de grande capacité (4) est maintenu serré dans le dispositif de serrage (5) directement ou dressé sur une palette (6).

11. Ébauche (1) de couvercle d'un couvercle de fermeture (41), qui est configurée pour fermer une ouverture de remplissage sur un côté supérieur d'un conteneur de grande capacité (4) appartenant au couvercle de fermeture (41), dans laquelle l'ébauche (1) de couvercle, qui est constituée d'un matériau pliable à l'encontre d'une force de rappel, présente une zone de fond polygonale (101) sur laquelle, via des lignes de pliage de fond (12) préconfectionnées, des zones de bord (11) sont articulées qui, dans l'état érigé, forment un bord (410) de couvercle de fermeture pour un engagement par complémentarité de forme avec un bord d'ouverture de l'ouverture de remplissage du conteneur de grande capacité (4), **caractérisée en ce que** l'ébauche de fermeture (1), dans l'état dans lequel il est érigé pour former le couvercle de fermeture (41) et ferme le conteneur de grande capacité (4) associé, forme un élément de sécurisation d'un système de sécurisation (9), en particulier selon l'une quelconque des revendications des revendications 1 à 10, qui sécurise le conteneur de grande capacité (4) rempli sur une surface de stockage (7) au moyen d'un dispositif de serrage (5) qui relie le couvercle de fermeture (41) à des points d'attache de la surface de stockage (7), dans laquelle l'ébauche de couvercle (1) présente au moins un double rabat (2) qui se projette depuis une zone de bord (11) associée, qui est formé par un rabat de base (21), qui fait saillie depuis la zone de bord (11) associée et forme un rabat intérieur dans l'ébauche de couvercle (1), et par un rabat retroussé (22), qui forme un rabat extérieur dans l'ébauche de couvercle (1) et qui est articulé sur le rabat de base (21) au moyen d'au moins une ligne de pliage de rabat (23) pour être plié contre le rabat de base (21), de telle façon que, dans l'état érigé, il en résulte un espace peu profond (20) qui, parallèlement à la zone de bord (11) associée, forme un passage (201) destiné à guider au moins une sangle de serrage (50) du dispositif de serrage (5) du système de sécurisation (9).

12. Ébauche de couvercle selon la revendication 11, **caractérisée en ce que**, au niveau du rabat de base (21) et du rabat retroussé (22), au moins une paire d'éléments de blocage (30) complémentaires sont réalisés pour établir une liaison de blocage détachable appartenant à une liaison de retenue (3) qui permet de fixer d'une manière détachable le rabat retroussé (22) au rabat de base (21) pour assurer le guidage de ladite au moins une sangle de serrage (50).

13. Ébauche de couvercle selon la revendication 11 ou 12, **caractérisée en ce que** le rabat retroussé (22) est articulé sur le rabat de base (21) parallèlement à la zone de bord (11) associée.

14. Ébauche de couvercle selon l'une quelconque des revendications 11 à 13, **caractérisée en ce que** le rabat retroussé (22) est articulé sur le rabat de base (21) au moyen d'une ligne de pliage double (230) qui est formée par deux lignes de pliage de rabat (23) s'étendant l'une à côté de l'autre, dont l'écartement forme une mesure de la faible profondeur de l'espace peu profond (20) pouvant être érigé.

15. Ébauche de couvercle selon la revendication 14, **caractérisée en ce que** la ligne de pliage double (230) est effilée en direction de bords de rabat (24) du double rabat (2), les bords de rabat (24) formant des ouvertures traversantes du passage (201) dans l'état érigé pour former l'espace peu profond (20).

16. Ébauche de couvercle selon la revendication 14 ou 15, **caractérisée en ce que** la ligne de pliage double (230) est élargie dans la région de surface centrale du double rabat (2).

17. Ébauche de couvercle selon l'une quelconque des revendications 11 à 16, **caractérisée en ce que** ladite au moins une ligne de pliage de rabat (23) est une ligne de pliage qui se plie sur un côté de telle façon que le rabat retroussé (22) peut être plié contre la surface du rabat de base (21) qui fait raccord avec une surface intérieure de couvercle de la zone de bord (11) associée.

18. Ébauche de couvercle selon l'une quelconque des revendications 11 à 17, **caractérisée en ce que** ledit au moins un double rabat (2) est articulé sur la zone de bord (11) associée au moyen d'une ligne de pliage de bord (15).

19. Ébauche de couvercle selon l'une quelconque des revendications 11 à 18, **caractérisée en ce qu'**un rabat latéral (25) est articulé au moyen d'une ligne de pliage latérale (251) sur au moins un bord de rabat (24), orienté transversalement à la ligne de pliage de base (12), dudit au moins double rabat (2), le bord de rabat (24), dans l'état érigé pour former l'espace peu profond (20), forme une ouverture traversante du passage (201), dans laquelle ladite au moins une ligne de pliage de rabat (23) croise la ligne de pliage latérale (251), et le rabat latéral (25) peut être replié de 180° jusque vers l'intérieur de l'espace peu profond (20) pouvant être déplié, formant ainsi, d'une manière multicouche, une région de paroi renforcée du passage (201) de l'espace peu profond (20).

20. Ébauche de couvercle selon la revendication 19, **caractérisée en ce que** la ligne de pliage de rabat (23) se termine dans ledit au moins un rabat latéral (25) et forme ainsi le rabat latéral (25) avec une nervure de renforcement (252) située à l'extérieur de celui-ci.

21. Ébauche de couvercle selon la revendication 19 ou 20, **caractérisée en ce qu'**un rabat latéral (25) est articulé sur chacun des deux bords de rabat (24) au moyen d'une ligne de pliage latérale (251).

22. Ébauche de couvercle selon la revendication 12, **caractérisée en ce que** la liaison de blocage est formée par une liaison à accrochage qui présente au moins un rabat de blocage (31) qui est réalisé sur le rabat de base (21) ou sur le rabat retroussé (22), et qui présente un évidement de blocage (32) associé, recevant le rabat de blocage (31) d'une manière détachable, qui est réalisé sur l'autre rabat, c'est-à-dire le rabat retroussé (22) ou le rabat de base (21).

23. Ébauche de couvercle selon la revendication 12, **caractérisée en ce que** les éléments de blocage (30) complémentaires destinés à produire la liaison de blocage (3) sont réalisés sur des bords de rabat (24) du double rabat (2) qui sont orientés transversalement à la ligne de pliage de fond (12), les bords de rabat (24) dans l'état érigé pour former l'espace peu profond (20) formant des ouvertures traversantes du passage (201).

24. Ébauche de couvercle selon la revendication 23, **caractérisée en ce que** les éléments de blocage (30) sont formés par des évidements de blocage (32) qui sont des évidements de bord sur le rabat retroussé (22), et par des rabats de blocage (31) sur le rabat de base (21), dans laquelle les rabats de blocage (31) sont articulés dans la région des bords de rabat (24) de telle façon qu'ils peuvent être insérés à travers les évidements de blocage (32) pour bloquer et sécuriser l'espace peu profond (20).

25. Ébauche de couvercle selon l'une quelconque des revendications 22 à 24, **caractérisée en ce que** les rabats de blocage (31) peuvent être pliés contre la surface latérale du rabat retroussé (22) qui vient à se trouver à l'extérieur de l'espace peu profond (20).

26. Ébauche de couvercle selon l'une quelconque des revendications 11 à 25, **caractérisée en ce que** des doubles rabats (2) sont agencés sur au moins une paire de zones de bord (11), mutuellement opposée l'une à l'autre, du bord (410) de couvercle de fermeture.

27. Ébauche de couvercle selon l'une quelconque des revendications 11 à 26, **caractérisée en ce que** les zones de bord (11) de la zone de fond polygonale (101) sont formées par au moins deux paires de zones de bord longitudinales (111), mutuellement opposée l'une à l'autre, et des zones de bord de coin (112), qui séparent des zones de bord longitudinales (111) adjacentes, dans laquelle ledit au moins un double rabat (2) est formé sur au moins une zone de bord longitudinale (111).

28. Ébauche de couvercle selon la revendication 27, **caractérisée en ce que** des zones de paroi de coin (113) sont articulées sur les zones de bord de coin (112), et des zones latérales (114) sont articulées sur les zones de bord longitudinales (111), dans laquelle les zones de paroi de coin (113) et les zones de bord de coin (112) forment des parois retroussées (411) qui peuvent être bloquées, entre lesquelles au moins des parties des zones latérales (114) viennent à se positionner d'une manière imperdable quand les zones de bord (11) sont érigées pour former le bord (410) de couvercle de fermeture.

29. Ébauche de couvercle selon la revendication 28, **caractérisée en ce que**, dans chaque zone de bord longitudinale (111), deux lignes de pliage obliques (27) sont réalisées, qui, partant depuis les coins de la zone de bord longitudinale (111) au niveau de la ligne de pliage de base (12), sont orientées en oblique jusqu'à l'intérieur de la zone de bord longitudinale (111), de telle façon que les zones de bord (11), dans l'état érigé pour former le bord (410) de couvercle de fermeture, peuvent être pliées à plat contre la zone de fond polygonale (101) pour plier une partie plate, les lignes de pliage de base (12) formant un bord extérieur de la partie plate.

30. Ébauche de couvercle selon l'une quelconque des revendications 11 à 29, **caractérisée en ce que** des percées (26) sont réalisées dans le rabat de base (21) et le rabat retroussé (22), qui, dans l'état dans lequel le rabat retroussé (22) est plié à plat contre le rabat de base (21), forment au niveau du double rabat (2) un passage transversal (261) pour le guidage d'une sangle de serrage.
